Europäisches Patentamt

European Patent Office

Office européen des brevets

(19)

(11) Veröffentlichungsnummer: **0 037 897**
**A1**

(12) **EUROPÄISCHE PATENTANMELDUNG**

(21) Anmeldenummer: **81101560.1**

(22) Anmeldetag: **05.03.81**

(51) Int. Cl.³: **F 01 D 5/08,** F 02 C 7/18

(30) Priorität: **15.04.80 DE 3014279**

(43) Veröffentlichungstag der Anmeldung: **21.10.81**
**Patentblatt 81/42**

(84) Benannte Vertragsstaaten: **AT CH DE FR GB IT LI NL**

(71) Anmelder: **M.A.N. MASCHINENFABRIK AUGSBURG-NÜRNBERG Aktiengesellschaft, Bahnhofstrasse 66, D-4200 Oberhausen 11 (DE)**

(72) Erfinder: **Owsianny, Edmund, Lickumstrasse 41, D-4200 Oberhausen 14 (DE)**

(54) **Einrichtung zur Kühlung des Inneren einer Gasturbine.**

(57) Einrichtung zur Kühlung des Inneren einer Gasturbine, bei der ein Eintrittskanal Kühlgas zwischen zwei Labyrinthdichtungen zuführt und bei der ein Pufferkanal (3) vorliegt, in den bzw. aus dem eine axiale Zu- und Abführung des Kühlgases durch den Eintrittskanal (4) und durch einen Austrittskanal (5) erfolgen. Der Eintrittskanal (4) ist innerhalb eines zur Rotationsachse der Gasturbine konzentrischen Zylindermantels gegenüber einer Erzeugenden des Zylindermantels um einen Winkel zwischen 0 und 60° in Laufrichtung geneigt und der Austrittskanal (5) ist gegenüber der Erzeugenden um einen Winkel zwischen 0 und 60° gegen die Laufrichtung geneigt. Der Austrittskanal (5) mündet in einen Pufferraum (6).

EP 0 037 897 A1

0037897

Die Erfindung betrifft eine Einrichtung zur Kühlung des Inneren einer Gasturbine, bei der ein Eintrittskanal Kühlgas zwischen zwei Labyrinthdichtungen zuführt.

Die Leistung bzw. der thermische Wirkungsgrad einer Gasturbine ist um so höher, je höher die Temperatur der in die Turbinenschaufeln eintretenden Verbrennungsgase und je niedriger die Temperatur der Abgase ist. Aus diesem Grund ist man bestrebt, die Turbinenschaufel mit möglichst heißen Verbrennungsgasen zu beaufschlagen. Es ist bekannt, zur Herabsetzung der thermischen Belastung Teile des Stators und des Rotors z. B. durch vom Verdichter abgezweigte Luft zu kühlen. Eine Einrichtung zur Kühlung einer Gasturbine ist in der DE-OS 2 218 705 beschrieben. Sie weist ein Ventilgehäuse auf, das für eine Rotation mit der Triebwerkswelle angeordnet ist. Die Wände des Gehäuses bilden eine ringförmige Luftkammer, die mit zwei Labyrinthdichtungen abgedichtet ist. Zwischen den Labyrinthdichtungen wird das Kühlgas zugeführt.

Aus der DE-PS 1 045 730 ist eine Einrichtung bekannt, bei der ein Kühlmittel durch Kanäle des Rotors fließt und dann zwischen zwei Labyrinthdichtungen in einen Sammelraum eintritt.

Es ist Aufgabe der Erfindung, eine Einrichtung zur Kühlung des Inneren einer Gasturbine zu schaffen, die gegenüber den bekannten Einrichtungen eine verbesserte Kühlgasströmung bietet. Insbesondere soll das Kühlgas durch die Rotation der Turbine gefördert werden.

Diese Aufgabe wird bei einer Einrichtung der eingangs genannten Art erfindungsgemäß dadurch gelöst, daß ein Pufferkanal vorliegt, in den bzw. aus dem eine im wesentlichen axiale Zu- und Abführung des Kühlgases durch den Eintrittskanal und durch einen Austrittskanal erfolgen.

Die Strömung des Kühlgases wird vorteilhaft dadurch unterstützt, daß der Eintrittskanal innerhalb eines zur Rotationsachse der Gasturbine konzentrischen Zylindermantel gegenüber einer Erzeugenden des Zylindermantels um einen Winkel $\alpha$ in Laufrichtung und der Austrittskanal gegenüber der Erzeugenden um einen Winkel $\beta$ gegen die Laufrichtung geneigt sind.

Vorteilhaft weisen der Winkel $\alpha$ eine Größe von 0 bis 60 Grad und der Winkel $\beta$ von 0 bis 60 Grad auf. Besonders vorteilhaft ist eine Größe der Winkel $\alpha$ und $\beta$ von 15 bis 60 Grad.

Eine Förderung des Kühlgases durch Zentrifugalkraft wird vorteilhaft dadurch erreicht, daß der Austrittskanal in einen Pufferraum mündet, der durch eine Bohrung mit dem Befestigungsraum des Schaufelfußes verbunden ist, und daß die Bohrung gegenüber der Rotationsachse um einen Winkel $\gamma$ geneigt ist. Der Winkel $\gamma$ weist vorteilhaft eine Größe von 15 bis 90 Grad auf.

Im folgenden wird ein Ausführungsbeispiel der Erfindung anhand der Zeichnung näher erläutert. Es zeigen:

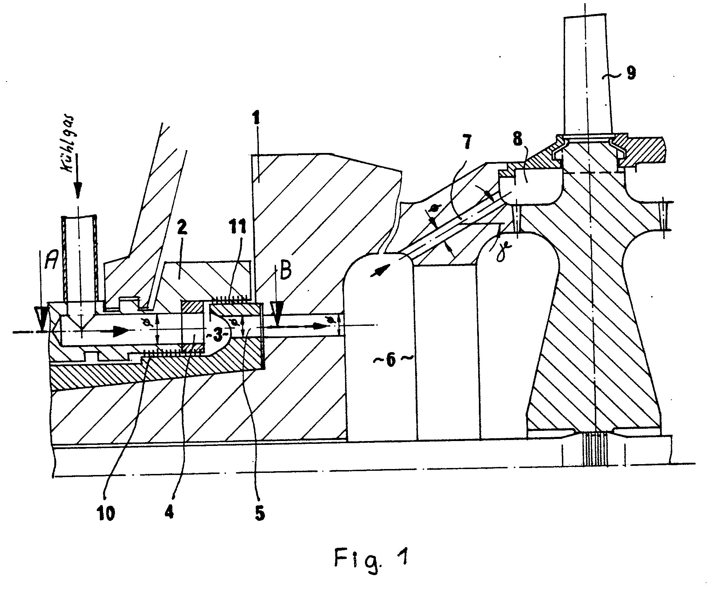

Figur 1    einen Teil einer Gasturbine mit einer erfindungsgemäßen Einrichtung zur Kühlung in geschnittener Darstellung und

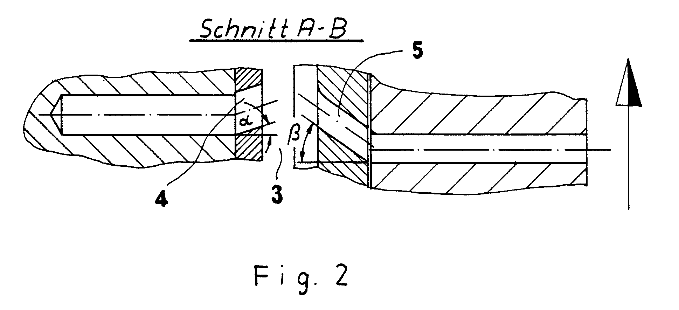

Figur 2    einen Schnitt entlang der Linie A ... B gemäß Figur 1 senkrecht zur Schnittebene der Figur 1.

Die Gasturbine besteht aus einem Rotor 1 und einem Stator 2. Das Kühlgas wird durch einen Eintrittskanal 4 in einen Pufferkanal 3 geführt, der zwischen dem Rotor 1 und dem Stator 2 durch zwei Labyrinthdichtungen 10 und 11 abgedichtet ist. Die Abführung des Kühlgases erfolgt durch einen Austrittskanal 5. Der Eintrittskanal 4 ist innerhalb eines zur Rotationsebene konzentrischen Zylindermantels gegenüber einer Erzeugenden des Zylindermantels um einen Winkel $\alpha$ in Laufrichtung geneigt. Der Austrittskanal 5 ist gegenüber der Erzeugenden um einen Winkel $\beta$ gegen die Laufrichtung geneigt.

Der Austrittskanal 5 mündet in einen Pufferraum 6, der durch eine Bohrung 7 mit dem Befestigungsraum 8 des Schaufelfußes 9 verbunden ist. Diese Bohrung 7 ist gegenüber der Rotationsachse um einen Winkel $\gamma$ geneigt, um eine Förderung des Kühlgases durch Zentrifugalkraft zu erreichen.

Die erfindungsgemäße Einrichtung bietet eine hervorragende Kühlgasströmung. Dadurch, daß das Kühlgas aufgrund der Anordnung des Eintrittskanals 4, des Austrittskanals 5 und der Bohrung 7 durch die Rotation der Turbine gefördert wird, wird erreicht, daß der Kühlgasdurchsatz mit steigender Drehzahl der Turbine wächst. Ohne irgendwelche Ventilmittel wird also eine Steuerung des Kühlgasstromes erzielt. Es kann daher von einer hervorragenden Lösung der anstehenden Probleme gesprochen werden.

0037897

Patentansprüche:

1. Einrichtung zur Kühlung des Inneren einer Gasturbine, bei der ein Eintrittskanal Kühlgas zwischen zwei Labyrinthdichtungen zuführt, dadurch gekennzeichnet, daß ein Pufferkanal (3) vorliegt, in den bzw. aus dem eine im wesentlichen axiale Zu- und Abführung des Kühlgases durch den Eintrittskanal (4) und durch einen Austrittskanal (5) erfolgen.

2. Einrichtung nach Anspruch 1, dadurch gekennzeichnet, daß der Eintrittskanal (4) innerhalb eines zur Rotationsachse der Gasturbine konzentrischen Zylindermantels gegenüber einer Erzeugenden des Zylindermantels um einen Winkel $\alpha$ in Laufrichtung und der Austrittskanal (5) gegenüber der Erzeugenden um einen Winkel $\beta$ gegen die Laufrichtung geneigt sind.

3. Einrichtung nach Anspruch 2, gekennzeichnet durch eine Größe des Winkels $\alpha$ von 0 bis 60 Grad.

4. Einrichtung nach Anspruch 2, gekennzeichnet durch eine Größe des Winkels $\beta$ von 0 bis 60 Grad.

5. Einrichtung nach Anspruch 1 bis 4, dadurch gekennzeichnet, daß der Austrittskanal (5) in einen Pufferraum (6) mündet, der durch eine Bohrung (7) mit dem Befestigungsraum (8) des Schaufelfußes (9) verbunden ist, und daß die Bohrung (7) gegenüber der Rotationsachse um einen Winkel $\gamma$ geneigt ist.

6. Einrichtung nach Anspruch 5, gekennzeichnet durch eine Größe des Winkels $\gamma$ von 15 bis 90 Grad.

7. Einrichtung nach Anspruch 2, gekennzeichnet durch eine Größe des Winkels $\alpha$ von 15 bis 60 Grad.

8. Einrichtung nach Anspruch 2, gekennzeichnet durch eine Größe des Winkels $\beta$ von 15 bis 60 Grad.

0037897

1/2

Fig. 1

*Schnitt A-B*

F i g. 2

# EUROPÄISCHER RECHERCHENBERICHT

| EINSCHLÄGIGE DOKUMENTE | | | KLASSIFIKATION DER ANMELDUNG (Int Cl ) |
|---|---|---|---|
| Kategorie | Kennzeichnung des Dokuments mit Angabe soweit erforderlich, der maßgeblichen Teile | betrifft Anspruch | |
| | <u>FR - A - 1 207 772</u> (ROLLS-ROYCE)<br>* Insgesamt *<br><br>-- | 1-3,5,<br>7 | F 01 D 5/08<br>F 02 C 7/18 |
| | <u>FR - A - 2 381 179</u> (ROLLS-ROYCE)<br>* Insgesamt *<br>& DE - A - 2 805 851<br><br>-- | 1-5,7,<br>8 | |
| | <u>FR - A - 2 209 041</u> (AVCO)<br>* Seite 6, Zeilen 1-28 *<br>& DE - A - 2 356 721<br><br>-- | 1-5,7 | RECHERCHIERTE SACHGEBIETE (Int. Cl ) |
| | <u>FR - A - 1 355 379</u> (ROLLS-ROYCE)<br>* Insgesamt *<br><br>-- | 1-3,5,<br>7 | F 01 D<br>F 02 C |
| D | <u>DE - B - 1 045 730</u> (MASCH. AUGSBURG NÜRNBERG)<br>* Insgesamt *<br><br>-- | 1,2,5 | |
| | <u>FR - A - 2 251 702</u> (M.U.T.U.M.)<br>* Seite 7, Zeilen 9-16, 25-31; Figuren 5,6 *<br>& DE - A - 2 357 326<br><br>-- | 1-5,7,<br>8 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| | <u>FR - A - 2 029 612</u> (GENERAL ELEC-<br>TRIC)<br>* Seite 4, Zeilen 5-12, 27-39; Seiten 5,6; Seite 7, Zeilen 1-27 *<br>& DE - A - 2 003 947    ./. | 1-3,5 | E: kollidierende Anmeldung<br>D: in der Anmeldung angeführtes Dokument<br>L: aus andern Gründen angeführtes Dokument |
| Der vorliegende Recherchenbericht wurde für alle Patentansprüche erstellt. | | | &: Mitglied der gleichen Patent-familie, übereinstimmendes Dokument |

| Recherchenort | Abschlußdatum der Recherche | Prüfer |
|---|---|---|
| Den Haag | 23-06-1981 | BONVIN |

EPA form 1503.1   06.78

Europäisches
Patentamt

**EUROPÄISCHER RECHERCHENBERICHT**

0037897

Nummer der Anmeldung

EP 81 10 1560

-2-

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 086 406</u> (UNITED AIR-CRAFT) <br><br> * Seite 2, Zeilen 37-38; Seite 3, Zeilen 1-12, 28-38; Seite 4, Zeilen 1-29 * <br><br> & DE - A - 2 119 024 <br><br> -- | 1-3,5 |
| | <u>FR - A - 2 117 848</u> (GENERAL ELECTRIC) <br><br> * Seite 4, Zeilen 2-38; Seite 5, Zeilen 1-8, 34-38; Seite 6, Zeilen 1-38 * <br><br> & DE - A - 2 147 537 <br><br> -- | 1-3,5 |
| | <u>FR - A - 2 062 769</u> (WESTINGHOUSE) <br><br> * Seite 6, Zeilen 10-37; Seiten 7,8 * <br><br> & DE - A - 2 047 648 <br><br> -- | 1,2 |
| | <u>GB - A - 926 160</u> (GENERAL ELECTRIC) <br><br> * Insgesamt * <br><br> -- | 1-5,7, 8 |
| | <u>GB - A - 1 194 663</u> (SULZER) <br> * Insgesamt * <br> & DE - A - 1 601 664 <br><br> -- | 1-5,7 |
| A | <u>US - A - 3 768 921</u> (UNITED AIR-CRAFT) <br><br> * Insgesamt * <br><br> --          ./. | 1 |

**KLASSIFIKATION DER ANMELDUNG (Int.Cl.³)**

**RECHERCHIERTE SACHGEBIETE (Int. Cl. ³)**

Europäisches
Patentamt

**EUROPÄISCHER RECHERCHENBERICHT**

0037897

Nummer der Anmeldung

EP 81 10 1560

-3-

| Kategorie | Kennzeichnung des Dokuments mit Angabe, soweit erforderlich, der maßgeblichen Teile | betrifft Anspruch |
|---|---|---|
| DA | <u>US - A - 3 712 756</u> (GENERAL ELEC- TRIC) <br><br> * Insgesamt * <br><br> & DE - A - 2 218 705 <br><br> ---- | 1 |

**EINSCHLÄGIGE DOKUMENTE**

KLASSIFIKATION DER ANMELDUNG (Int.Cl. 3)

RECHERCHIERTE SACHGEBIETE (Int. Cl. 3)